# FASCICULE DE BREVET EUROPEEN

(11) **EP 2 556 554 B1**
(45) Date de publication et mention de la délivrance du brevet: **02.04.2014**
(21) Numéro de dépôt: 11730337.0
(22) Date de dépôt: 21.03.2011
(51) Int. Cl.: H01M 8/10, H01M 8/24, H01M 8/02

(54) **PILE À COMBUSTIBLE COMPORTANT UNE MEMBRANE À CONDUCTION IONIQUE LOCALISÉE ET PROCÉDÉ DE FABRICATION**
BRENNSTOFFZELLE MIT EINER MEMBRAN MIT LOKALISIERTER IONENLEITUNG UND VERFAHREN ZU DESSEN HERSTELLUNG
FUEL CELL COMPRISING A MEMBRANE HAVING LOCALIZED IONIC CONDUCTION AND METHOD FOR MANUFACTURING SAME

(30) Priorité: 07.04.2010 FR 1001436
(43) Date de publication de la demande: 13.02.2013
(73) Titulaire: Commissariat à l'Énergie Atomique et aux Énergies Alternatives, 75015 Paris (FR)
(72) Inventeur: FAUCHEUX, Vincent, 38250 Lans en Vercors (FR); LATOUR, Antoine, F-38000 Grenoble (FR); LAURENT, Jean-Yves, F-38420 Domène (FR); MARTINENT, Audrey, F-38000 Grenoble (FR)
(74) Mandataire: Talbot, Alexandre
(86) Numéro de dépôt international: PCT/FR2011/000156
(87) Numéro de publication internationale: WO 2011/124778

(56) Documents cités:
- EP-A1- 1 220 346
- EP-A1- 1 727 228
- DE-A1- 19 624 887
- FR-A1- 2 894 720
- US-A- 5 861 221

## Description

### Domaine technique de l'invention

L'invention concerne une pile à combustible ayant au moins une cellule élémentaire et un capot pourvu d'une paroi interne enfermant la cellule élémentaire. La cellule est pourvue de première et seconde électrodes et d'une membrane formée par un électrolyte polymère comprenant une partie ioniquement conductrice, ladite membrane comporte :
- une première face principale constituée par une première partie recouverte par la première électrode et une première partie non-couverte par la première électrode et,
- une seconde face principale constituée par une seconde partie recouverte par la seconde électrode et une seconde partie non-couverte par la seconde électrode.

L'invention concerne également un procédé de fabrication d'une pile à combustible.

### État de la technique

La tension délivrée par une pile à combustible unitaire, c'est-à-dire une pile à combustible comportant une pile élémentaire unique constituée par un assemblage Electrode-Membrane-Electrode (ou assemblage EME) avec des collecteurs de courant associés, n'est en général pas suffisante pour des applications faibles/moyennes puissances. En effet, certaines applications susceptibles d'utiliser des piles à combustible comme source d'énergie nécessitent des tensions élevées, par exemple, supérieures à quelques volts. Pour augmenter les tensions, il est nécessaire d'utiliser une pile à combustible comportant une pluralité de cellules élémentaires connectées en série, l'anode d'une cellule élémentaire étant reliée à la cathode de la cellule adjacente.

A l'heure actuelle, une architecture de type planaire est privilégiée pour des applications de faible puissance de type nomade ou portable au détriment d'une architecture type "filtre presse" plus onéreuse et peu proprice à l'intégration dans ce type de dispositif.

L'architecture planaire consiste à juxtaposer dans un même plan plusieurs piles élémentaires associées en série les unes aux autres. Une fois réalisée, la pile à combustible planaire est généralement intégrée dans un capot pour permettre la connexion avec le combustible. Le capot rapporté et généralement scellé à la pile est constitué par un matériau inerte et assure l'étanchéité du système.

De récents travaux ont proposé une architecture planaire ayant plusieurs cellules élémentaires réalisées à partir d'un même membrane.

Le document US-A-2004071865 propose une architecture de pile à combustible permettant d'associer sur une même membrane plusieurs paires d'électrodes et d'augmenter artificiellement la tension élémentaire. La pile à combustible est constituée de plusieurs cellules élémentaires séparées entre elles par des couches isolantes verticales. La connexion entre deux cellules élémentaires est effectuée grâce à une pièce conductrice reliant l'anode d'une des piles élémentaires à la cathode d'une autre pile élémentaire adjacente et traversant la membrane entre deux couches isolantes verticales. La connexion forme ainsi une traversée de courant dans la membrane. Cette architecture se heurte, néanmoins, à des problèmes de fuites gazeuses survenant en particulier en périphérie de la pile et dues à la présence des interfaces entre les zones actives électrochimiquement et les traversées de courant. En effet, lors du cycle de fonctionnement et d'arrêt de la pile, la membrane est soumise à une alternance de phases d'humidification et d'assèchement qui entraîne une variation de l'épaisseur de la membrane. Aux interfaces, ces variations d'épaisseur introduisent des contraintes mécaniques importantes qui contribuent à la survenance de décollements de la membrane et de fuites gazeuses. Ces fuites entraînent des pertes de performance mais sont, également, potentiellement dangereuses du fait du risque de formation d'un mélange explosif hydrogène/oxygène. Par ailleurs, les traversées de courant dans la membrane induisent une faible conductivité électronique, à l'origine de pertes de performance et d'échauffement de la membrane.

Le document DE-A-19624887 propose également une pile à combustible comportant plusieurs cellules élémentaires. La pile à combustible comporte un contact, électriquement conducteur et ioniquement non-conducteur, qui connecte électriquement chaque membrane des cellules élémentaires.

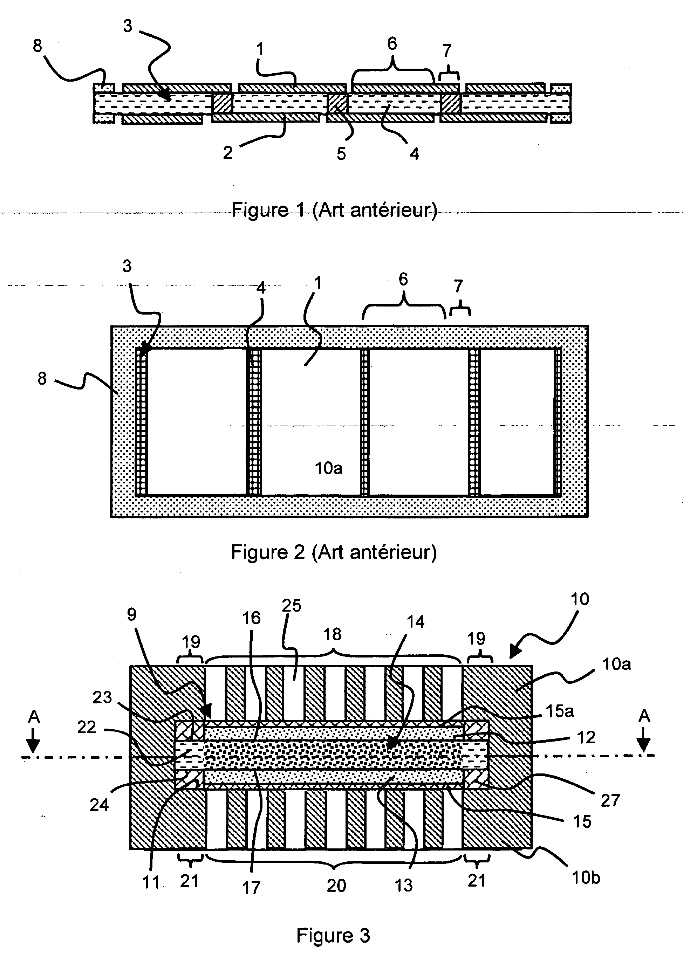

La demande de brevet US-A-20060228605 propose une autre architecture de pile à combustible ayant une membrane électrolytique formée par imprégnation d'un tissu avec un matériau conducteur ionique. Les figures 1 et 2 représentent une telle pile comportant un ensemble d'anodes 1 et de cathodes 2 de part et d'autre de la membrane 3. Le tissu est constitué par des fibres de chaîne 4 isolantes électriquement et des fibres de trame 5, alternativement, isolantes et conductrices électriquement, formant ainsi respectivement des zones électriquement isolantes 6 et des zones électriquement conductrices 7. Un joint 8 est déposé à la périphérie du tissu. Les zones électriquement conductrices 7 délimitent chaque cellule élémentaire et assurent également la connexion en série des cellules élémentaires ainsi formées. Cette solution permet de remédier aux problèmes de fuites de combustible aux interfaces, entre les zones électrochimiquement actives et les zones électriquement conductrices 7, puisque le tissu est pleinement imprégné de matériau conducteur ionique. Cependant, la présence du tissu au sein de la membrane 3 diminue la densité de puissance de la pile à combustible. En effet, la membrane 3 ainsi formée doit présenter une épaisseur minimale pour assurer la tenue mécanique de l'ensemble. Cette épaisseur est de l'ordre de 20 micromètres. Or, pour augmenter les densités de puissance, les membranes doivent présenter une épaisseur la plus faible possible, de préférence, entre 1 à 10 micromètres. En outre, les fibres 4 utilisées pour former le tissu des zones électriquement isolantes 7 gênent la conduction protonique des zones électrochimiquement actives. Enfin, les variations d'épaisseur de la membrane, observées au cours du fonctionnement de la pile à combustible, peuvent à terme provoquer le décollement du joint et l'apparition de fuites internes de gaz. En effet, le joint 8 déposé sur une zone de la membrane électrochimiquement active est soumis à des contraintes mécaniques importantes, causées par la variation volumique de la membrane.

Enfin, le document EP-A-1220346 décrit une pile à combustible comportant une plaque en trame non-conductrice ioniquement entre deux électrodes. La plaque en trame est recouverte en partie par un électrolyte polymère conducteur ioniquement. Un joint étanche aux gaz est déposé directement sur une partie non-conductrice en périphérie de la plaque en trame 10.

### Objet de l'invention

L'invention a pour but une pile à combustible et un procédé de fabrication d'une pile à combustible remédiant aux inconvénients de l'art antérieur.

Plus particulièrement, l'invention a pour but une pile à combustible pouvant atteindre des tensions élevées et notamment des tensions compatibles avec des applications visant l'alimentation de dispositifs portables, tout en étant facile à réaliser et présentant une tenue mécanique améliorée et une bonne étanchéité. L'invention a également pour but de proposer un procédé de fabrication facile à mettre en oeuvre pour obtenir une telle pile à combustible.

Selon l'invention, ce but est atteint par une pile à combustible et un procédé de fabrication d'une telle pile selon les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, schématiquement et, respectivement, en coupe et en vue de dessus, une pile à combustible selon l'art antérieur.
- la figure 3 représente, schématiquement et en coupe, un mode particulier de réalisation d'une pile à combustible selon l'invention.
- la figure 4 représente, schématiquement, une coupe selon l'axe AA de la figure 3.
- la figure 5 représente, schématiquement et en coupe, un autre mode particulier de réalisation d'une pile à combustible selon l'invention.
- la figure 6 représente, schématiquement, une coupe selon l'axe BB de la figure 5.
- la figure 7 représente, schématiquement et en coupe, un autre mode particulier de réalisation d'une pile à combustible selon l'invention.
- la figure 8 représente, schématiquement, une coupe selon l'axe CC de la figure 7.
- les figures 9 et 10 représentent, schématiquement et en coupe, différentes étapes d'un procédé de fabrication de la pile à combustible, selon un autre mode de réalisation particulier.
- les figures 11 à 15 représentent, schématiquement et en coupe, différentes étapes d'un procédé de fabrication de la pile à combustible, selon un autre mode de réalisation particulier.
- les figures 16 et 17 représentent, schématiquement et en coupe, différentes étapes d'un procédé de fabrication de la pile à combustible, selon un autre mode de réalisation particulier.
- la figure 18 représente, schématiquement et en coupe, un autre mode particulier de réalisation d'une pile à combustible selon l'invention.
- les figures 19 et 20 représentent, schématiquement et, respectivement, en perspective et en coupe, un capot ouvert d'une pile à combustible selon la figure 18, dépourvu de cellules élémentaires.

### Description de modes particuliers de réalisation

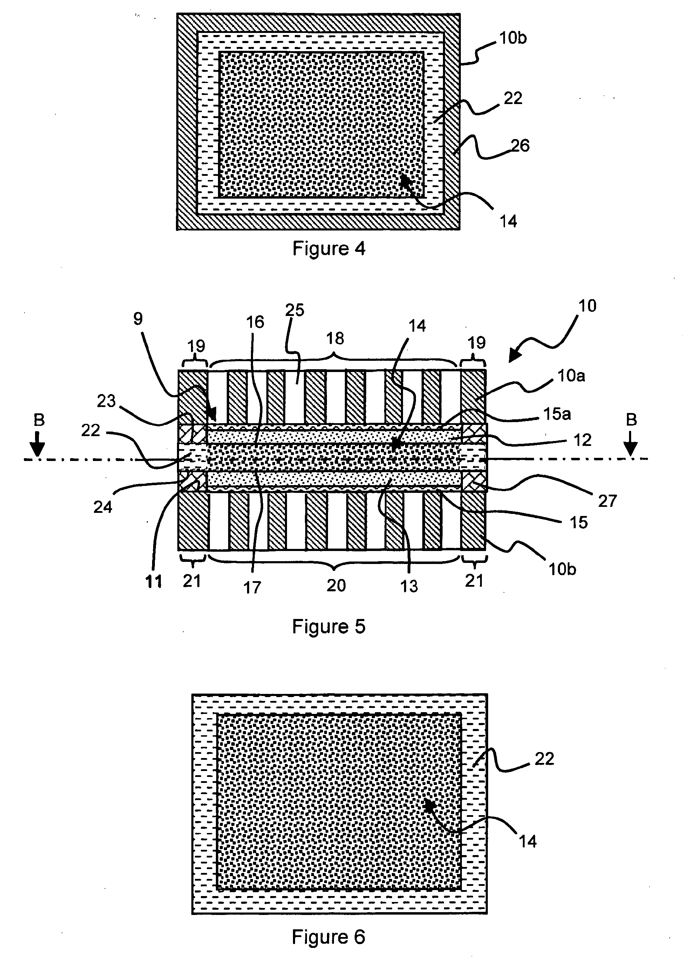

Selon un mode de réalisation particulier représenté aux figures 3 et 4, une pile à combustible a au moins une cellule élémentaire 9 et un capot 10 pourvu d'une paroi interne 11 enfermant la cellule élémentaire 9.

La cellule élémentaire 9 est pourvue de première et seconde électrodes, respectivement, 12 et 13, et d'une membrane 14 formée par un électrolyte polymère comprenant une partie ioniquement conductrice.

La cellule élémentaire 9 peut comporter des premier et second collecteurs de courant, 15a et 15b, qui recouvrent, respectivement, les première et seconde électrodes, 12 et 13. Chaque premier et second collecteur de courant, 15a et 15b, est classiquement constitué par une couche mince conductrice de courant et poreuse, de préférence métallique. Les premier et second collecteurs de courant ,15a et 15b, sont disposés entre la paroi interne 11 et, respectivement, les première et seconde électrodes, 12 et 13.

Les premier et second collecteurs de courant, 15a et 15b, ont une épaisseur, avantageusement, comprise entre 0,1µm et 100µm.

Les première et seconde électrodes, respectivement 12 et 13, ont une épaisseur, avantageusement, comprise entre 1µm et 100µm.

Les première et seconde électrodes, respectivement 12 et 13, peuvent aussi jouer le rôle de collecteurs.

L'épaisseur de la membrane 14 est, avantageusement, comprise entre 10µm et 200µm.

La membrane 14 est disposée entre les première et seconde électrodes, respectivement 12 et 13, qui sont généralement perméables au gaz, par exemple, poreuses.

La membrane 14 est formée par un électrolyte polymère comprenant au moins une partie ioniquement conductrice et une partie 22 ioniquement non-conductrice. La membrane 14 et/ou l'électrolyte polymère formant ladite membrane est également non-conductrice électroniquement pour éviter tout court-circuit dans la pile à combustible.

Ainsi, la partie 22 ioniquement non-conductrice est également non-conductrice électroniquement. La partie 22 ioniquement non-conductrice présente des propriétés isolantes.

La partie ioniquement conductrice est également non-conductrice électroniquement. La partie ioniquement conductrice présente des propriétés isolantes.

Selon un mode de réalisation particulier représenté à la figure 3, la membrane 14 est constituée par un unique matériau électrolyte polymère comportant :
- au moins une partie conductrice ioniquement et non-conductrice électroniquement et,
- au moins une partie 22, ironiquement et électroniquement, non-conductrice.

On entend par unique matériau électrolyte polymère, un matériau issu d'un polymère initial unique, modifié de manière à obtenir ladite partie conductrice ioniquement et non-conductrice électroniquement et ladite partie 22, ioniquement et électroniquement, non-conductrice.

L'électrolyte polymère formant la partie conductrice ioniquement et la partie non-conductrice ioniquement peut, avantageusement, être issu d'un même et unique électrolyte polymère initial. Ainsi, la membrane 14 peut, initialement, être un électrolyte polymère conducteur protonique, de préférence, choisi parmi les polymères ayant des fonctions acides sulfoniques de type Nafion ® (marque déposée par Dupont de Nemours).

La membrane 14 comporte une première face principale 16 et une seconde face principale 17. La première face principale 16 est constituée par une première partie recouverte 18 par la première électrode 12 et une première partie non-couverte 19 par la première électrode 12. De même, la seconde face principale 17 est constituée par une seconde partie recouverte 20 par la seconde électrode 13 et une seconde partie non-couverte 21 par la seconde électrode 13.

L'électrolyte polymère comporte au moins une partie non-conductrice 22 ioniquement formant une première zone inactive 23 localisée sur la première partie non-couverte 19 et/ou une seconde zone inactive 24 localisée sur la seconde partie non-couverte 21.

La partie non-conductrice 22 ioniquement n'est plus active électrochimiquement. Ainsi, la capacité de la membrane 14 à absorber de l'eau est supprimée localement en formant une partie non-conductrice 22 ioniquement. Cette partie non-conductrice 22 ioniquement assure uniquement le rôle de séparateur physique entre la première électrode 12 et la seconde électrode 13, au niveau de zones localisées de la membrane 14.

Comme représenté à la figure 3, la partie non-conductrice 22 ioniquement peut s'étendre de la première zone inactive 23 à la seconde zone inactive 24, sur toute l'épaisseur de la membrane 14.

Comme représenté à la figure 4, la partie non-conductrice 22 ioniquement délimite, avantageusement, la cellule élémentaire 9. Chaque première et seconde zone inactive, 23 et 24, entoure respectivement les première et seconde électrodes, 12 et 13. Les première et seconde parties recouvertes, 18 et 20, par les première et seconde électrodes, 12 et 13, correspondent alors aux surfaces actives de la cellule élémentaire 9.

Le capot 10 permet d'assurer une tenue mécanique de la cellule élémentaire 9. Lors du fonctionnement de la pile à combustible, le capot 10 absorbe les contraintes mécaniques notamment liées aux déformations provoquées par le gonflement de la membrane 14 et la pression de combustible appliquée à la membrane 14.

Le capot 10 se présente généralement en deux parties, un premier capot 10a et un second capot 10b. Les premier et second capots, respectivement 10a et 10b, sont placés de part et d'autre de la membrane 14 et scellés de sorte que la paroi interne 11 du capot 10 enferme la cellule élémentaire 9.

Chaque premier et second capot, respectivement 10a et 10b, comporte une paroi perméable aux gaz en regard vis-à-vis de chaque première et seconde électrode, respectivement, 12 et 13.
Comme représenté à la figure 3, chaque premier et second capot 10a et 10b est rendu perméable grâce à des ouvertures 25 traversant toute l'épaisseur du capot 10 de manière à former des passages pour les gaz alimentant les première et seconde électrodes, respectivement 12 et 13.

Comme illustré à la figure 4, chaque premier et second capot, 10a et 10b, peut, également, être pourvu d'un rebord 26 constituant une jonction des premier et second capots, 10a et 10b, à la périphérie du capot 10. Le premier capot 10a est rapporté au second capot 10b de manière à envelopper entièrement la cellule élémentaire 9.

Le capot 10 peut également assurer la connexion à un système de collecte d'eau et d'alimentation en combustible (non représenté).

Comme représenté à la figure 3, la paroi interne 11 est, de préférence, fixée directement sur au moins les première et seconde zones inactives, respectivement 23 et 24, de la membrane 14, pour assurer l'étanchéité de la cellule élémentaire 9. La paroi interne 11 du capot 10 est fixée mécaniquement sur au moins la première ou la seconde zone inactive, respectivement 23 et 24, par des moyens d'adhésion 27 étanches aux gaz et comblant l'espace aménagé entre la paroi interne 11 du capot 10 et la membrane 14. Les moyens d'adhésion 27 permettent de solidariser le capot 10 à la cellule élémentaire 9.

Ainsi, les moyens d'adhésion 27 étant appliqués sur les première et seconde zones inactives, 23 et 24, non-conductrices ioniquement, ils ne sont pas soumis aux contraintes mécaniques provoquées par les variations d'épaisseur de la membrane 14. La localisation des moyens d'adhésion 27 sur les première et seconde zones inactives, respectivement 23 et 24, évite par conséquent le décollement des moyens d'adhésion 27 de la membrane 14 et contribue, de ce fait, à l'amélioration de la tenue mécanique de la pile à combustible.
Les moyens d'adhésion 27 peuvent, avantageusement, être appliqués sur le pourtour de chaque première et seconde électrode, 12 et 13, de la cellule élémentaire 9.

En outre, les- moyens d'adhésion 27 peuvent, avantageusement, être appliqués sur la totalité des première et seconde parties non-couvertes, respectivement 19 et 21. Les moyens d'adhésion 27 assurent alors l'étanchéité de la pile à combustible.

Les moyens d'adhésion 27 comportent, avantageusement, un matériau adhésif, de préférence, choisi parmi les ciments, les matériaux de soudure comme les métaux et les alliages métalliques, les rubans adhésifs et les colles ou les vernis à base d'époxy, de silicone ou de polyuréthane. On entend par ruban adhésif un support présentant deux faces en matériau adhésif.

Les moyens d'adhésion 27 peuvent comporter un matériau conducteur électrique et constituer, également, des moyens de connexion électrique des première et seconde électrodes, 12 et 13.

Le matériau conducteur électrique est choisi parmi le carbone et les métaux, de préférence, l'or, l'argent, le cuivre, le nickel, l'aluminium et leurs alliages.

Les moyens d'adhésion 27 peuvent être appliqués sur une partie ou, avantageusement, la totalité des première et seconde zones inactives, respectivement 23 et 24:

En outre, selon un mode de réalisation préféré, les première et seconde zones inactives, 23 et 24, forment respectivement les première et seconde parties non-couvertes, 19 et 21. Les première et seconde zones inactives, 23 et 24, sont alors situées sur le pourtour, respectivement, des première et seconde électrodes, 12 et 13, et les moyens d'adhésion 27 sont appliqués sur la totalité des première et seconde zones inactives, 23 et 24 (figure 4).

Selon une variante représentée aux figures 5 et 6, les premier et second capots, 10a et 10b, ne possèdent pas de rebord 26. Les parties latérales de la pile à combustible (à droite et à gauche à la figure 5) ne sont pas recouvertes par le capot 10. La partie non-conductrice 22 ioniquement s'étend alors de la première zone inactive 23 à la seconde zone inactive 24, sur toute l'épaisseur de la membrane 14 de sorte que les moyens d'adhésion 27 et la partie non-conductrice 22 ioniquement assurent l'étanchéité au niveau des parties latérales de la pile à combustible.

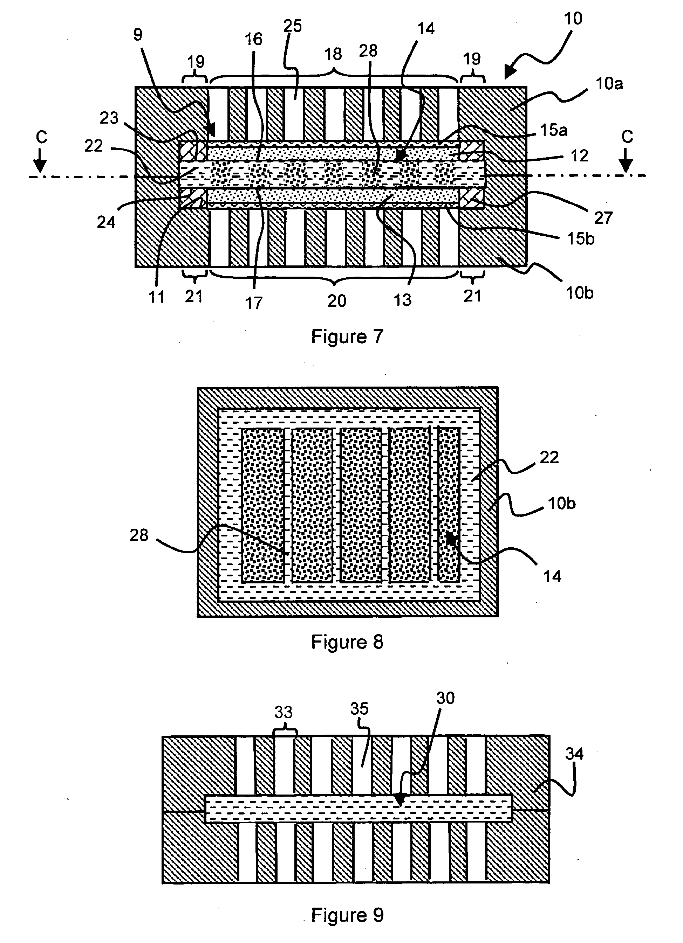

Selon un mode de réalisation préférentiel représenté aux figures 7 et 8, la pile à combustible comporte une partie non-conductrice 28 additionnelle formant un réseau de zones inactives additionnelles au sein de la membrane 14.

Comme représenté à la figure 8, le réseau peut, par exemple, former des bandes parallèles sur les première et seconde faces principales, respectivement 16 et 17, de la membrane 14. Alternativement, le réseau peut former un quadrillage dans la membrane 14.

Comme représenté à la figure 7, la partie non-conductrice 28 additionnelle est localisée au niveau des première et seconde parties recouvertes, 18 et 20, de la membrane 14 respectivement dessous les première et seconde électrodes, 12 et 13. Comme pour la partie non-conductrice 22, la partie non-conductrice 28 additionnelle peut être présente sur toute l'épaisseur de la membrane 14 ou uniquement au niveau de la première et/ou la seconde face principale, respectivement, 16 et 17. La partie non-conductrice 28 additionnelle n'est pas soumise aux variations de volume. La présence de la partie non-conductrice 28 additionnelle renforce la membrane 14 et améliore la tenue mécanique de la pile à combustible.
Une telle pile à combustible est obtenue en rendrant, localement, la membrane 14 inactive électrochimiquement. Dans les polymères électrolytes de type Nafion®, la conduction protonique est assurée par les groupements acides sulfoniques -SO₃H de la chaîne polymère. Les fonctions acides sulfoniques permettent la migration des protons à travers la membrane 14 sous forme H⁺ mais également sous une forme solvatée H3O⁺. La présence de molécules d'eau provoque alors le gonflement de la membrane 14, avec une variation qui peut atteindre jusqu'à 30% par rapport à l'épaisseur initiale de la membrane 14.
À titre d'exemple, pour une épaisseur de membrane 14 Nafion® allant de 10µm à 200µm, la variation d'épaisseur peut atteindre une amplitude de 3µm à 30µm. En supprimant ou rendant les fonctions -SO₃H inactives, on peut éviter le gonflement d'une zone localisée de la membrane 14.

Deux stratégies peuvent être envisagées pour rendre, localement, la membrane 14 inactive électrochimiquement. La première consiste à former des zones conductrices 29 ioniquement à partir d'un polymère non-conducteur 30 ionique et la seconde consiste à former des zones non-conductrices 31 ioniquement à partir d'un polymère conducteur 32 ionique.

Selon un mode de réalisation particulier, un procédé de fabrication d'une telle pile à combustible comporte les étapes de :
- formation des première et seconde zones inactives 23 et 24, respectivement, sur des première et seconde faces principales, 16 et 17, d'une membrane 14 formée par un électrolyte polymère conducteur ionique et,
- fixation d'un capot 10 sur la membrane 14 par des moyens d'adhésion 27 placés entre la première zone inactive 23 et la paroi interne 11 du capot 10 et/ou la seconde zone inactive 24 et la paroi interne 11 du capot 10.

L'étape de fixation du capot 10 peut être effectuée après ou avant la réalisation des première et seconde zones inactives, respectivement 23 et 24.

Selon une variante, les deux étapes de formation et de fixation, décrites ci-dessus, peuvent être réalisées simultanément.

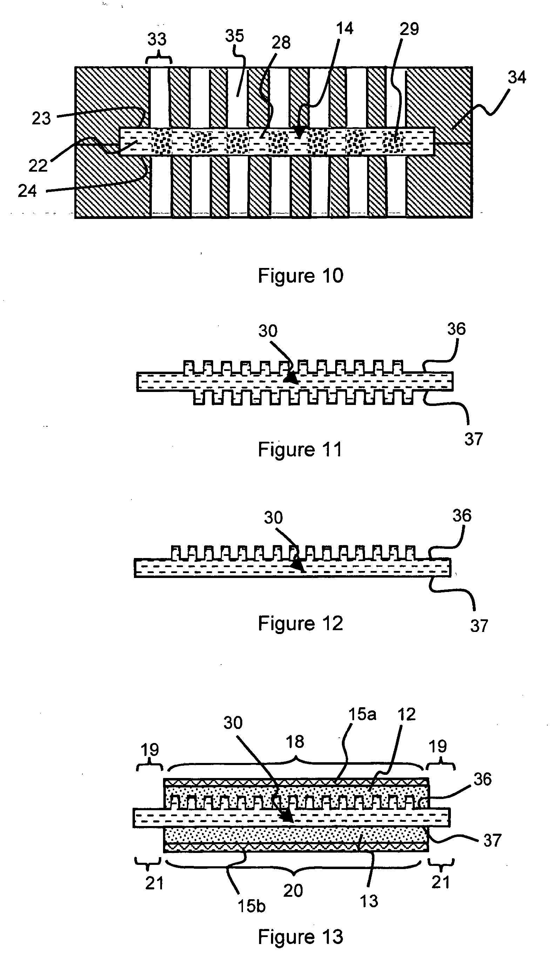

Selon un mode de réalisation particulier représenté aux figures 9 et 10, les première et seconde zones inactives, 23 et 24 peuvent être formées à partir d'une membrane 14 initialement constituée par un polymère non-conducteur 30 ionique ayant des fonctions halogénures de sulfonyle, de préférence, fluorure de sulfonyle -SO₂F.

Le polymère non-conducteur 30 peut, par exemple, être un polymère perfluoré de type Nafion® dont les fonctions acides sulfoniques, assurant le transfert des protons dans la membrane 14, sont neutralisées sous forme d'halogénure de sulfonyle -SO₂F.

Les première et seconde zones inactives, respectivement, 23 et 24, sont réalisées en formant des zones conductrices 29 ioniquement, par hydrolyse des fonctions halogénures de sulfonyle de zones prédéterminées 33 du polymère non-conducteur 30 ionique. En particulier, les fonctions -SO₂F du polymère non-conducteur 30 sont hydrolysées en fonctions acides sulfoniques -SOₛH qui peuvent alors assurer la conduction et la migration des protons H⁺ ou H₃O⁺ dans les chaînes polymères de la membrane 14.

Comme représenté à la figure 9, préalablement à la réalisation de la cellule élémentaire 9, une couche de polymère non-conducteur 30 ayant des dimensions identiques à celles de la membrane 14 est disposée dans une presse 34 percée d'orifices 35 ou poreuse selon des zones prédéterminées 33 choisies.

La presse 34 forme avec la couche de polymère 30 un ensemble qui est ensuite immergé dans une solution d'hydrolyse.

Les orifices 35 ou les pores de la presse 34 sont réalisés de sorte que la solution d'hydrolyse peut atteindre les zones prédéterminées 33 du polymère 30.

Cette solution d'hydrolyse est choisie parmi les solutions susceptibles d'attaquer chimiquement les fonctions halogénures de sulfonyle du polymère 30 et les convertir en fonctions acides sulfoniques. Les fonctions -SO₂F sont hydrolysées en fonction acide sulfonique -SO₃H, responsable de la conduction et de la migration des protons H⁺ ou H₃O⁺ au sein de la membrane 14.

Comme représenté à la figure 10, les zones prédéterminées 33 sont transformées par hydrolyse en zones conductrices 29 ioniquement. Cette hydrolyse doit intervenir uniquement sur les fonctions du polymère électrolyte responsables du transfert et de la conduction des protons au sein de la membrane 14. Cette étape d'hydrolyse rend le polymère localement conducteur ionique et conserve des parties non-conductrices 22 ioniquement formant les première et seconde zones inactives 23 et 24 de la membrane 14 et, le cas échéant, des parties non-conductrices 28 additionnelles selon les zones prédéterminées 33 choisies.

La cellule élémentaire 9 peut ensuite être réalisée, selon tout procédé connu, à partir de la membrane 14 ainsi obtenue.

Enfin, comme précédemment, le capot 10 est fixé à la membrane 14 de la cellule élémentaire 9 par des moyens d'adhésion 27 placés entre la première zone inactive 23 et la paroi interne 11 du capot 10 et/ou la seconde zone inactive 24 et la paroi interne 11 du capot 10.

Selon un autre mode de réalisation particulier représenté aux figures 11 à 15, le procédé de fabrication comporte la réalisation d'une cellule élémentaire 9, selon tout procédé connu, à partir d'une membrane 14 initialement constituée d'un polymère non-conducteur 30 ionique ayant des fonctions -SO₂F, de préférence, un polymère de type Nafion® sous forme -SO₂F.

Le polymère non-conducteur 30 Nafion® a la caractéristique d'être thermodurcissable sous forme -SO₃H et thermoplastique sous forme -SO₂F. Il est, de ce fait, difficile de mettre en forme le polymère non-conducteur 30 Nafion® sous forme -SO₃H et facile sous forme -SO₂F, notamment par des techniques classiques de thermoformage.

Une couche de polymère- non-conducteur 30 Nafion® sous forme -SO₂F est utilisée pour former une membrane 14 ayant une géométrie en trois dimensions, notée 3D.

Comme représenté à la figure 11, la géométrie 3D peut être réalisée sur les première et seconde faces principales, respectivement 36 et 37, d'une couche de polymère non-conducteur 30 Nafion® sous forme SO₂F.

Alternativement, comme représenté à la figure 12, une géométrie 3D peut être réalisée uniquement sur une des première et seconde faces principales, 36 et 37, du polymère non-conducteur 30 Nafion® sous forme SO₂F.

La géométrie 3D est réalisée, de préférence, sur la face du polymère non-conducteur 30 destinée à être en contact avec la cathode de la cellule élémentaire 9. Ainsi, si la première électrode 12 est une cathode, la géométrie 3D est réalisée, avantageusement sur la première face principale 36 du polymère non-conducteur 30 Nafion® sous forme SO₂F.

En particulier, comme représenté à la figure 13, une couche de polymère non-conducteur 30 Nafion® sous forme SO₂F est déposée puis mise en forme par thermoformage, par exemple, par pression mécanique afin d'imprimer une forme 3D sur la première face principale 36 du polymère 30.

À titre d'exemple, on peut obtenir par thermoformage une forme de créneaux avec un facteur de forme élevé, supérieur à 1,2.

Une cellule élémentaire 9 est ensuite réalisée selon tout procédé connu à partir de Une cellule élémentaire 9 est ensuite réalisée selon tout procédé connu à partir de la couche polymère non-conducteur 30 ainsi mise en forme. En particulier, les première et seconde électrodes, 12 et 13, sont classiquement déposées, respectivement, sur une partie des première et seconde faces principales, 36 et 37, de la couche polymère 30 Nafion® sous forme -SO₂F.

Le dépôt des première et seconde électrodes, 12 et 13, forment respectivement les première et seconde parties recouvertes, 18 et 20, ainsi que les première et seconde parties non-couvertes, 19 et 21.

Les premier et second collecteurs de courant, 15a et 15b, sont déposés, respectivement, sur les première et seconde électrodes, 12 et 13, selon tout procédé connu.

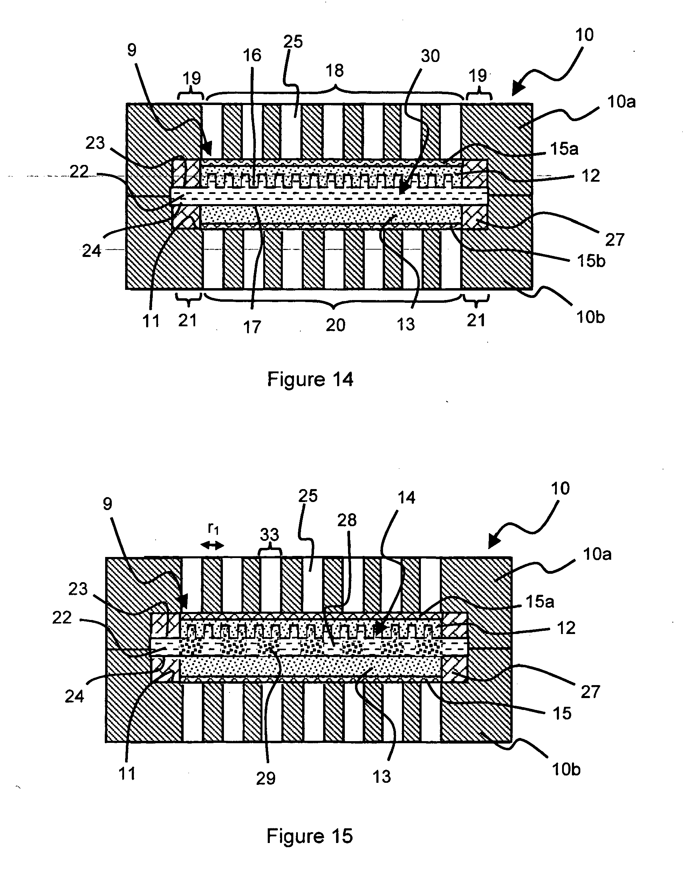

Comme représenté à la figure 14, le capot 10 est ensuite fixé par l'intermédiaire des moyens d'adhésion 27 disposés entre la paroi interne 11 du capot 10 et la couche polymère non-conducteur 30 Nafion® sous forme -SO₂F de façon à délimiter le pourtour des première et seconde électrodes, respectivement, 12 et 13. Le capot 10 et la cellule élémentaire 9 forment un ensemble capot/cellule.

Comme représenté à la figure 15, une hydrolyse des fonctions -SO₂F de zones prédéterminées 33 du polymère non-conducteur 30 Nafion® sous forme -SO₂F est effectuée, par trempage de l'ensemble capot/cellule dans une ou plusieurs solutions d'hydrolyse.

Par exemple, l'ensemble capot/cellule est plongé successivement dans un bain d'une solution de soude, NaOH, puis d'acide sulfurique, H₂SO₄. Les première et seconde électrodes, 12 et 13, sont poreuses pour permettre le passage de la ou des solutions d'hydrolyse jusqu'aux zones prédéterminées 33.

Selon ce mode de réalisation particulier, le capot 10 fait office de presse pour former les zones conductrices 29 ioniquement à partir du polymère non-conducteur 30 ionique. Les ouvertures 25 du capot 10 permettent de rendre les zones prédéterminées 33 accessibles et de contrôler cette étape d'hydrolyse, pour obtenir une membrane 14 avec les caractéristiques de conduction ionique souhaitées (figure 15).

La résolution r₁ obtenue est de l'ordre de 0,1mm. On entend par résolution, la plus petite dimension r₁ du motif formé par la première ou la seconde zone inactive, respectivement 23 et 24, de la membrane 14. Ce mode de réalisation particulier peut être appliqué, de préférence, pour une cellule élémentaire 9 ayant une surface active supérieure ou égale à 1cm².

Par ailleurs, la configuration en trois dimensions de la membrane 14 permet d'augmenter la surface développée de contact entre les première et seconde électrodes, 12 et 13, et la membrane 14 tout en conservant une même surface projetée. La configuration 3D améliore ainsi la densité de puissance de la pile à combustible.

Selon un autre mode de réalisation particulier, la membrane 14 est initialement constituée par un polymère conducteur 32 ionique ayant des fonctions acides sulfoniques -SO₃H, par exemple, un polymère Nation® sous forme -SO₃H.
Les parties non-conductrices, 22 et 28, ioniquement et notamment les première et seconde zones inactives, 23 et 24, peuvent être réalisées en formant des zones non-conductrices 31 ioniquement, par dégradation des fonctions acides sulfoniques -SO₃H de zones prédéterminées 33 du polymère conducteur 32 ionique.

La dégradation des fonctions acides sulfoniques -SO₃H du polymère conducteur 32 ionique de départ peut être réalisée par un traitement au Laser classique ou par un traitement thermique local.

À titre d'exemple non représenté, un laser Excimer émettant à une longueur d'onde de 248nm, avec un pulse de 450 mJ/cm², peut être utilisé pour dégrader localement et en profondeur les fonctions -SO₃H d'une couche de polymère conducteur 32 Nafion® sous forme -SO₃H, d'une épaisseur comprise entre 10µm et 200µm. La dégradation est localisée au niveau de zones prédéterminées 33 du polymère conducteur 32 Nafion® sous forme -SO₃H.
La résolution r₂ obtenue est de l'ordre de 10µm. Ce mode de réalisation particulier -peut être utilisé, de préférence, pour une- cellule élémentaire 9 dont la surface active est supérieure ou égale à 100mm².

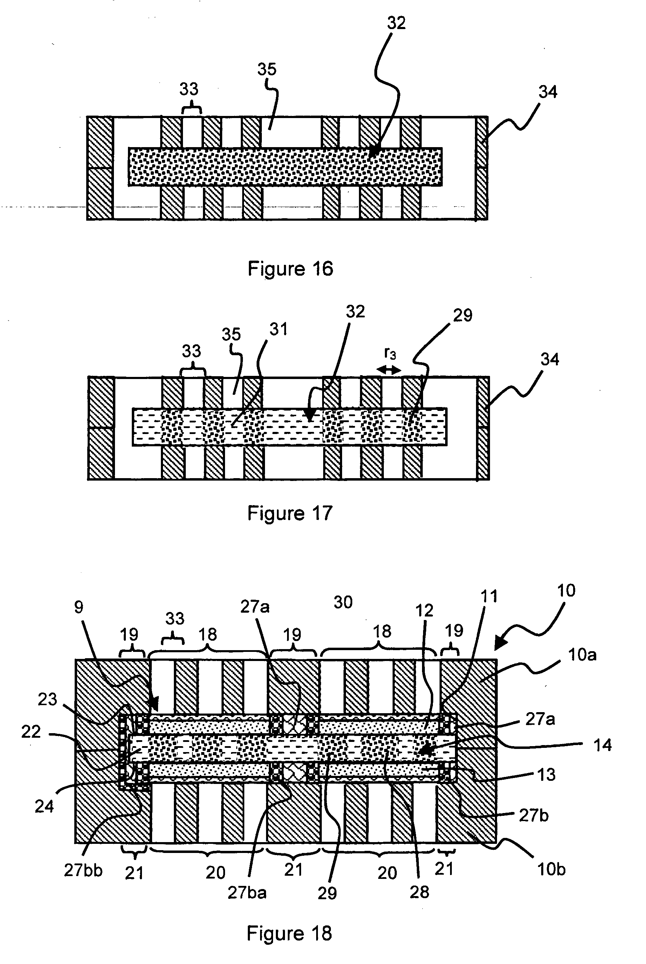

Selon une variante représentée aux figures 16 et 17, la membrane 14 est initialement constituée par un polymère conducteur 32 ionique ayant des fonctions acides sulfoniques. Les première et seconde zones inactive, 23 et 24, c'est-à-dire la partie non-conductrice 22 ioniquement et, éventuellement, la partie non-conductrice 28 additionnelle peuvent être réalisées en créant des zones non-conductrices 31 ioniquement par conversion chimique des fonctions acides sulfoniques -SO₃H de zones prédéterminées 33 du polymère conducteur 32 ionique, en fonctions halogénures de sulfonyle

-SOₙX.

Comme représenté à la figure 16, une couche de polymère conducteur 32 Nafion® sous forme -SO₃H est emprisonnée dans une presse 34 de manière à former un ensemble presse/membrane. La presse 34 est pourvue d'orifices 35 permettant d'exposer des zones prédéterminées 33 du polymère conducteur 32 ionique.

La conversion consiste à traiter uniquement les zones prédéterminées 33 du polymère conducteur 32 Nafion® sous forme -SO₃H par traitement chimique. Cette étape consiste à plonger l'ensemble presse/membrane successivement dans une première solution de soude puis dans une solution d'attaque chimique. Cette solution d'attaque chimique est constituée par un mélange, avantageusement, équipondéral de pentachlorure de phosphore, PCl₅, sous forme de poudre et de trichlorure de phosphoryle, POCl₃, sous forme liquide. L'ensemble presse/membrane est ensuite chauffé dans la solution - PCl₅/ POCl₃ à une température comprise entre 100°C et 130°C, de préférence à 120°C, pendant plusieurs heures puis rincé avec du POCl₃ et/ou CCl₄, pour éliminer l'excès de PCl₅.

Les fonctions acides -SO₃H du polymère conducteur 32 Nafion® sont alors converties chimiquement en sulfonate de sodium, -SO₃Na, puis en chlorure de sulfonyle, -SO₂Cl. Les fonctions -SO₃H sont ainsi neutralisées. Les zones ainsi hydrolysées ne sont plus conductrices ioniquement puisque la fonction chlorure de sulfonyle ne peut pas assurer le transfert des protons au sein de la membrane 14.

Comme représenté à la figure 17, les parties protégées par la presse 34 forment alors les zones conductrices 29 ioniquement de la membrane 14 et les parties exposées forment les zones non-conductrice 31 ioniquement correspondant, selon les zones prédéterminées 33 choisies, à la partie non-conductrice 22 ioniquement et la partie non-conductrice 28 additionnelle de la membrane 14 finalisée. La presse 34 permet un masquage négatif par rapport au capot 10.

La résolution r₃ obtenue est de l'ordre de 0,1mm. Ce mode de réalisation particulier peut être utilisé, de préférence, pour une cellule élémentaire 9 dont la surface active est supérieure ou égale à 1cm².

La membrane 14 présente alors les caractéristiques de conduction ionique souhaitées pour réaliser, selon le procédé décrit ci-dessus, une cellule élémentaire 9 ayant une tenue mécanique améliorée.

Comme précédemment, le capot 10 est ensuite disposé de sorte qu'il enveloppe la cellule élémentaire 9 et que les ouvertures 25 exposent, de préférence, les zones conductrices 29 ioniquement sans exposer les zones non-conductrices 31 ioniquement.

Selon un-autre mode de réalisation particulier représenté aux figures 18 à 20, la pile à combustible comporte plusieurs cellules élémentaires 9 coplanaires connectées en série et enfermées dans le capot 10.

Une telle pile à combustible multi-cellules peut être réalisée selon des procédés identiques à ceux décrits précédemment à l'exception du fait que le capot 10 enveloppe toutes les cellules élémentaires 9.

En outre, les zones prédéterminées 33 doivent être choisies en tenant compte du nombre et de la position des différentes cellules élémentaires 9 de la pile à combustible.

Par ailleurs, comme représenté à la figure 18, la pile à combustible a, avantageusement, une architecture de type "diapositive" dans laquelle les cellules élémentaires 9 ont une même membrane 14, unique et commune à l'ensemble des cellules 9.

La membrane 14 comporte au moins une partie non-conductrice 22 ioniquement délimitant chaque cellule 9 et s'étendant de la première zone inactive 23 à la seconde zone inactive 24, sur toute l'épaisseur de la membrane 14 (figure 18).

Les moyens d'adhésion 27 sont, de préférence, constitués par un matériau adhésif permettant de rendre le capot 10 solidaire des cellules élémentaires 9 et un matériau conducteur électrique assurant la connexion électrique des cellules élémentaires 9 et leur mise en série.

Les moyens d'adhésion 27 sont disposés au moins au niveau des première et seconde zones inactives, 23 et 24, entre la paroi interne 11 et la membrane 14.

Les moyens d'adhésion 27 peuvent, avantageusement, former des pistes conductrices assurant la mise en série des cellules 9 de la pile à combustible.

Comme représenté à la figure 18, les moyens d'adhésion 27 sont formés par deux éléments distincts constitués, respectivement, par le matériau adhésif 27a et le matériau conducteur électrique 27b.
Les pistes conductrices sont, avantageusement, en matériau conducteur électrique 27b et constituées par une première piste 27ba conductrice et une seconde piste 27bb conductrice.

La première piste 27ba conductrice encadre chacune des première et seconde électrodes, 12 et 13, et est en contact direct avec les parois latérales des première et seconde électrodes,12 et 13.

La seconde piste 27bb conductrice est connectée à la première piste 27ba et relie la première électrode 12 d'une cellule élémentaire 9 à la seconde électrode 13 d'une cellule élémentaire 9 adjacente.

Le matériau adhésif 27a peut, avantageusement, être disposé sur les première et seconde parties non-couvertes, 19 et 21, qui ne sont pas utilisées par les pistes conductrices, 27ba et 27bb.

Les première et seconde pistes, 27ba et 27bb, conductrices peuvent être directement intégrées dans les premier et second capots, respectivement 10a et 10b, selon tout procédé connu. Les première et seconde pistes, 27ba et 27bb peuvent, par exemple, être déposées par dépôt physique ou chimique en phase vapeur, noté respectivement PVD ou CVD, ou par électrodéposition du matériau conducteur électrique 27b sur la paroi interne 11 du capot 10.

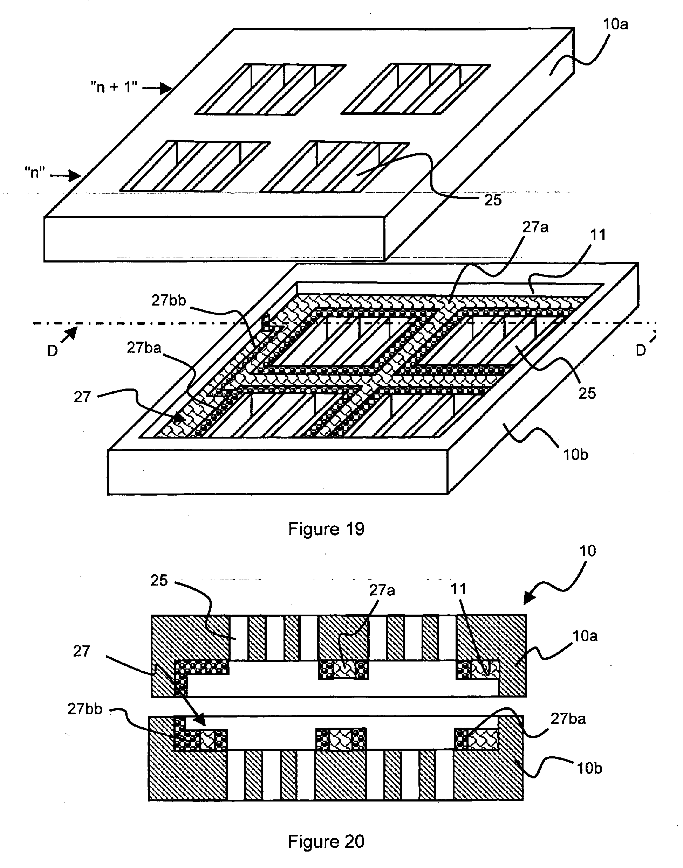

Pour illustrer ce mode de réalisation particulier, les figures 19 et 20 représentent un capot ouvert sans les cellules élémentaires 9 d'une pile à combustible selon la figure 18. La seconde piste 27bb est déposée de façon à permettre la reprise de contact entre la première électrode 12 d'une cellule élémentaire 9 en position "n" et la seconde électrode 13 d'une cellule élémentaire 9 en position "n+1" adjacente.

Comme représenté aux figures 19 et 20, la seconde piste 27bb débute de la première piste 27ba destinée à être en contact avec la seconde électrode 13 de la cellule élémentaire 9 en position "n", se prolonge le long de la paroi interne 11 du second capot 10b vers le premier capot 10a jusqu'à la première piste 27ba destinée à être en contact avec la première électrode 12 de la cellule élémentaire 9 en position "n+1" adjacente. Selon ce mode de réalisation, les moyens d'adhésion 27 améliorent la tenue mécanique de la pile à combustible et le matériau adhésif 27a évite, de plus, la corrosion du matériau conducteur électrique 27b formant les pistes conductrices, 27ba et 27bb.

Selon une variante non représentée, les moyens d'adhésion 27 sont formés par un matériau ayant à la fois des propriétés adhésives et des propriétés de conduction électrique. Les moyens d'adhésion 27 peuvent, par exemple, être formés par une colle à base d'époxy, de silicone ou de polyuréthane contenant un matériau conducteur électrique, par exemple, un matériau métallique. Les moyens d'adhésion 27 sont disposés de manière à former uniquement des pistes conductrices assurant à la fois la conduction électrique et l'adhésion des cellules élémentaires 9 à la paroi 10.

Une pile à combustible selon l'invention présente l'avantage d'être facile et rapide à mettre en oeuvre, tout en permettant d'atteindre des densités de puissance élevées. Par ailleurs, la pile à combustible présente une très bonne tenue mécanique, une bonne étanchéité améliorant significativement la résistance au vieillissement de la pile.

## Revendications

1. Pile à combustible ayant au moins une cellule élémentaire (9) et un capot (10) pourvu d'une paroi interne (11) enfermant la cellule élémentaire (9), ladite cellule (9) étant pourvue de première et seconde électrodes (12, 13) et d'une membrane (14) comportant un électrolyte polymère, ladite membrane (14) comportant :
- une première face principale (16) constituée par une première partie recouverte (18) par la première électrode (12) et une première partie non-couverte (19) par la première électrode (12) et,
- une seconde face principale (17) constituée par une seconde partie recouverte (20) par la seconde électrode (13) et une seconde partie non-couverte (21) par la seconde électrode (13),
**caractérisée en ce que** la membrane (14) comporte:
- une première partie en un matériau polymère,
- une deuxième partie obtenue par modification des groupes fonctionnels du matériau polymère,
l'une des parties formant l'électrolyte polymère, l'autre partie étant non-conductrice (22) électriquement et ioniquement formant une première zone inactive (23,24) localisée sur la première partie non-couverte (19, 21),
et **en ce que** la paroi interne (11) du capot (10) est fixée mécaniquement sur au moins la première zone inactive (23, 24) par des moyens d'adhésion (27) étanches aux gaz et comblant l'espace aménagé entre la paroi interne (11) du capot (10) et la membrane (14).

2. Pile à combustible selon la revendication 1, **caractérisée en ce que** les moyens d'adhésion (27) comportent un matériau adhésif.

3. Pile à combustible selon la revendication 2, **caractérisée en ce que** le matériau adhésif est choisi parmi les ciments, les matériaux de soudure, les rubans adhésifs et les colles ou les vernis à base d'époxy, de silicone ou de polyuréthane.

4. Pile à combustible selon l'une quelconque des revendications 1 à 3, **caractérisée en ce que** les moyens d'adhésion (27) comportent un matériau conducteur électrique.

5. Pile à combustible selon la revendication 4, **caractérisée en ce que** le matériau conducteur électrique est choisi parmi le carbone et les métaux, de préférence, l'or, l'argent, le cuivre, le nickel, l'aluminium et leurs alliages.

6. Pile à combustible selon l'une quelconque des revendications 1 à 5, **caractérisée en ce que** la partie non-conductrice (22) ioniquement s'étend de la première zone inactive (23) à une seconde zone inactive (24) localisée sur la seconde partie non couverte (21), sur toute l'épaisseur de la membrane (14).

7. Pile à combustible selon l'une quelconque des revendications 1 à 6, **caractérisée en ce qu'**elle comporte une partie non-conductrice (28) additionnelle formant un réseau de zones inactives additionnelles au sein de la membrane (14).

8. Pile à combustible selon l'une quelconque des revendications 1 à 7, **caractérisée en ce qu'**elle comporte plusieurs cellules élémentaires (9) coplanaires connectées en série et enfermées dans le capot (10) et **en ce que** les cellules élémentaires (9) ont une même membrane (14), unique et commune à l'ensemble desdites cellules (9), ladite membrane (14) comportant au moins une partie non-conductrice (22) ioniquement délimitant chaque cellule (9) et s'étendant de la première zone inactive (23) à une seconde zone inactive (24) localisée sur la seconde partie non couverte (21), sur toute l'épaisseur de la membrane (14).

9. Pile à combustible selon la revendication 8, **caractérisée en ce que** les moyens d'adhésion (27) forment des pistes conductrices constituées par:
- une première piste (27ba) encadrant chacune des première et seconde électrodes (12, 13) et en contact direct avec les parois latérales desdites première et seconde électrodes (12, 13) et,
- une seconde piste (27bb) connectée à la première piste (27ba) et reliant la première électrode (12) d'une cellule élémentaire (9) à la seconde électrode (13) d'une cellule élémentaire (9) adjacente.

10. Procédé de fabrication d'une pile à combustible selon l'une quelconque des revendications 1 à 9, **caractérisé en ce qu'**il comporte les étapes de
- formation des première et seconde zones inactives (23, 24), respectivement, sur des première et seconde faces principales (16, 17) d'une membrane (14) formée par un électrolyte polymère conducteur ionique et,
- fixation d'un capot (10) sur ladite membrane (14) par des moyens d'adhésion (27) placés entre la première zone inactive (23) et la paroi interne (11) du capot (10) et/ou la seconde zone inactive (24) et la paroi interne (11) du capot (10).

11. Procédé selon la revendication 10, **caractérisé en ce que** la membrane (14) étant initialement constituée par un polymère non-conducteur (30) ionique ayant des fonctions halogénures de sulfonyle, les première et seconde zones inactives (23, 24) sont réalisées en formant des zones conductrices (29) ioniquement par hydrolyse des fonctions halogénures de sulfonyle de zones prédéterminées (33) dudit polymère (30).

12. Procédé selon la revendication 10, **caractérisé en ce que** la membrane (14) étant initialement constituée par un polymère conducteur (32) ionique ayant des fonctions acides sulfoniques, les première et seconde zones inactives (23, 24) sont réalisées en formant des zones non-conductrices (31) ioniquement, par dégradation des fonctions acides sulfoniques de zones prédéterminées (33) dudit polymère (32).

13. Procédé selon la revendication 10, **caractérisé en ce que** la membrane (14) étant initialement constituée par un polymère conducteur (32) ionique ayant des fonctions acides sulfoniques, les première et seconde zones inactives (23, 24) sont réalisées en créant des zones non-conductrices (31) ioniquement par conversion chimique des fonctions acides sulfoniques de zones prédéterminées (33) dudit polymère (32) en fonctions halogénures de sulfonyle.

## Patentansprüche

1. Brennstoffzelle mit wenigstens einer Elementarzelle (9) und einer Kappe (10), die mit einer die Elementarcelle (9) umschließenden Innenwand (11) versehen ist, wobei die Zelle (9) mit einer ersten und einer zweiten Elektrode (12, 13) und mit einer Membran (14), welche einen Polymerelektrolyten umfasst, versehen ist, wobei die Membran (14) umfasst:
- eine erste Hauptseite (16), die von einem durch die erste Elektrode (12) bedeckten ersten Teil (18) und einem durch die erste Elektrode (12) nicht bedeckten ersten Teil (19) gebildet ist, und
- eine zweite Hauptseite (17), die von einem durch die zweite Elektrode (13) bedeckten zweiten Teil (20) und einem durch die zweite Elektrode (13) nicht bedeckten zweiten Teil (21) gebildet ist,
**dadurch gekennzeichnet, dass** die Membran (14) umfasst:
- einen ersten Teil aus einem Polymermaterial,
- einen zweiten Teil, der durch Modifizieren der funktionellen Gruppen des Polymermaterials erhalten wird,
wobei einer der Teile den Polymerelektrolyten bildet, wobei der andere Teil nicht elektrisch- und ionenleitend ist, der einen an dem nicht bedeckten ersten Teil (19, 21) gelegenen ersten inaktiven Bereich (23, 24) bildet,
und dass die Innenwand (11) der Kappe (10) an wenigstens dem ersten inaktiven Bereich (23, 24) durch Haftmittel (27), die gasdicht sind und den zwischen der Innenwand (11) der Kappe (10) und der Membran (14) ausgebildeten Raum auffüllen, mechanisch befestigt ist.

2. Brennstoffzelle nach Anspruch 1, **dadurch gekennzeichnet, dass** die Haftmittel (27) ein Haftmaterial umfassen.

3. Brennstoffzelle nach Anspruch 2, **dadurch gekennzeichnet, dass** das Haftmaterial aus Zementen, Schweißmaterialien, Klebebändern und Klebstoffen oder Lacken auf Epoxid-, Silikon- oder Polyurethan-Basis ausgewählt ist.

4. Brennstoffzelle nach einem der Ansprüche 1 bis 3, **dadurch gekennzeichnet, dass** die Haftmittel (27) ein elektrisch leitendes Material umfassen.

5. Brennstoffzelle nach Anspruch 4, **dadurch gekennzeichnet, dass** das elektrisch leitende Material aus Kohlenstoff und Metallen, vorzugsweise Gold, Silber, Kupfer, Nickel, Aluminium und deren Legierungen ausgewählt ist.

6. Brennstoffzelle nach einem der Ansprüche 1 bis 5, **dadurch gekennzeichnet, dass** der nicht ionenleitende Teil (22) sich von dem ersten inaktiven Bereich (23) bis zu einem an dem zweiten nicht bedeckten Teil (21) gelegenen zweiten inaktiven Bereich (24) über die gesamte Dicke der Membran (14) erstreckt.

7. Brennstoffzelle nach einem der Ansprüche 1 bis 6, **dadurch gekennzeichnet, dass** sie einen zusätzlichen nicht leitenden Teil (28) umfasst, der ein Netz aus zusätzlichen inaktiven Bereichen innerhalb der Membran (14) bildet.

8. Brennstoffzelle nach einem der Ansprüche 1 bis 7, **dadurch gekennzeichnet, dass** sie mehrere koplanare Elementarzellen (9), die in Reihe geschaltet und in der Kappe (10) eingeschlossen sind, umfasst und dass die Elementarzellen (9) eine einzige und allen Zellen (9) gemeinsame gleiche Membran (14) haben, wobei die Membran (14) wenigstens einen nicht ionenleitenden Teil (22) umfasst, der jede Zelle (9) begrenzt und der sich von dem ersten inaktiven Bereich (23) bis zu einem an dem zweiten nicht bedeckten Teil (21) gelegenen zweiten inaktiven Bereich (24) über die gesamte Dicke der Membran (14) erstreckt.

9. Brennstoffzelle nach Anspruch 8, **dadurch gekennzeichnet, dass** die Haftmittel (27) Leiterbahnen bilden, die gebildet sind von:
- einer ersten Leiterbahn (27ba), die eine jede der ersten und zweiten Elektroden (12, 13) umrahmt und in direktem Kontakt mit den Seitenwänden der ersten und der zweiten Elektrode (12, 13) ist, und
- einer zweiten Leiterbahn (27bb), die mit der ersten Leiterbahn (27ba) verbunden ist und die erste Elektrode (12) einer Elementarzelle (9) mit der zweiten Elektrode (13) einer benachbarten Elementarzelle (9) verbindet.

10. Verfahren zur Herstellung einer Brennstoffzelle nach einem der Ansprüche 1 bis 9, **dadurch gekennzeichnet, dass** es die Schritte umfasst des:
- Ausbildens des ersten und des zweiten inaktiven Bereichs (23, 24) auf einer ersten bzw. einer zweiten Hauptseite (16, 17) einer von einem ionenleitenden Polymerelektrolyten gebildeten Membran (14), und des
- Befestigens einer Kappe (10) an der Membran (14) durch Haftmittel (27), die zwischen dem ersten inaktiven Bereich (23) und der Innenwand (11) der Kappe (10) und/oder dem zweiten inaktiven Bereich (24) und der Innenwand (11) der Kappe (10) angeordnet sind.

11. Verfahren nach Anspruch 10, **dadurch gekennzeichnet, dass** die Membran (14) anfangs von einem nicht ionenleitenden Polymer (30) mit Sulfonylhalogenidfunktionen gebildet ist, und der erste und der zweite inaktive Bereich (23, 24) dadurch ausgebildet werden, dass ionenleitende Bereiche (29) durch Hydrolyse der Sulfonylhalogenidfunktionen von vorbestimmten Bereichen (33) des Polymers (30) gebildet werden.

12. Verfahren nach Anspruch 10, **dadurch gekennzeichnet, dass** die Membran (14) anfangs von einem ionenleitenden Polymer (32) mit Sulfonsäurefunktionen gebildet ist, und der erste und der zweite inaktive Bereich (23, 24) dadurch ausgebildet werden, dass nicht ionenleitende Bereiche (31) durch Abbau der Sulfonsäurefunktionen von vorbestimmten Bereichen (33) des Polymers (32) gebildet werden.

13. Verfahren nach Anspruch 10, **dadurch gekennzeichnet, dass** die Membran (14) anfangs von einem ionenleitenden Polymer (32) mit Sulfonsäurefunktionen gebildet ist, und der erste und der zweite inaktive Bereich (23, 24) dadurch ausgebildet werden, dass nicht ionenleitende Bereiche (31) durch chemische Umwandlung der Sulfonsäurefunktionen von vorbestimmten Bereichen (33) des Polymers (32) in Sulfonylhalogenidfunktionen erzeugt werden.

## Claims

1. A fuel cell having at least one individual cell (9) and a cover (10) provided with an inner wall (11) housing the individual cell (9), said cell (9) being provided with first and second electrodes (12, 13) and with a membrane (14) comprising a polymer electrolyte, said membrane (14) comprising:
- a first main surface (16) formed by a first covered part (18) covered by the first electrode (12) and a first uncovered part (19) not covered by the first electrode (12) and,
- a second main surface (17) formed by a second covered part (20) covered by the second electrode (13) and a second uncovered part (21) not covered by the second electrode (13),
**characterized in that** the membrane (14) comprises:
- a first part made from a polymer material,
- a second part obtained by modification of functional groups of the polymer material,
one of the parts forming the polymer electrolyte, the other part being electrically and ionically non-conducting (22) forming a first inactive area (23,24) localized on the first uncovered part (19, 21),
and **in that** the inner wall (11) of the cover (10) is mechanically fixed onto at least the first inactive area (23, 24) by gas-tight adhesion means (27) filling the space arranged between the inner wall (11) of the cover (10) and the membrane (14).

2. The fuel cell according to claim 1, **characterized in that** the adhesion means (27) comprise an adhesive material.

3. The fuel cell according to claim 2, **characterized in that** the adhesive material is chosen from cements, soldering materials, adhesive tapes and glues or varnishes having an epoxy, silicone or polyurethane base.

4. The fuel cell according to any one of claims 1 to 3, **characterized in that** the adhesion means (27) comprise an electrically conducting material.

5. The fuel cell according to claim 4, **characterized in that** the electrically conducting material is chosen from carbon and metals, preferably gold, silver, copper, nickel, aluminium and their alloys.

6. The fuel cell according to any one of claims 1 to 5, **characterized in that** the ionically non-conducting part (22) extends from the first inactive area (23) to a second inactive area (24) localized on the second uncovered part (21), over the whole thickness of the membrane (14).

7. The fuel cell according to any one of claims 1 to 6, **characterized in that** it comprises an additional non-conducting part (28) forming a network of additional inactive areas within the membrane (14).

8. The fuel cell according to any one of claims 1 to 7, **characterized in that** it comprises several coplanar individual cells (9) connected in series and enclosed in the cover (10) and **in that** the individual cells (9) have a same membrane (14) common to all of said cells (9), said membrane (14) comprising at least one ionically non-conducting part (22) delineating each cell (9) and extending from the first inactive area (23) to a second inactive area (24) localized on the second uncovered part (21), over the whole thickness of the membrane (14).

9. The fuel cell according to claim 8, **characterized in that** the adhesion means (27) form conducting tracks formed by:
- a first track (27ba) surrounding each of the first and second electrodes (12, 13) and in direct contact with the side walls of said first and second electrodes (12, 13) and,
- a second track (27bb) connected to the first track (27ba) and connecting the first electrode (12) of an individual cell (9) to the second electrode (13) of an adjacent individual cell (9).

10. A fabrication method of a fuel cell according to any one of claims 1 to 9, **characterized in that** it comprises the following steps:
- formation of the first and second inactive areas (23, 24) respectively on first and second main surfaces (16, 17) of a membrane (14) formed by an ionically conducting polymer electrolyte and,
- fixing of a cover (10) onto said membrane (14) by adhesion means (27) placed between the first inactive area (23) and the inner wall (11) of the cover (10) and/or the second inactive area (24) and the inner wall (11) of the cover (10).

11. The method according to claim 10, **characterized in that** the membrane (14) being initially formed by an ionically non-conducting polymer (30) having sulfonyl halide functions, the first and second inactive areas (23, 24) are achieved by forming ionically conducting areas (29) by hydrolysis of the sulfonyl halide functions of predefined areas (33) of said polymer (30).

12. The method according to claim 10, **characterized in that** the membrane (14) being initially formed by an ionically conducting polymer (32) having sulfonic acid functions, the first and second inactive areas (23, 24) are achieved by forming ionically non-conducting areas (31), by degradation of the sulfonic acid functions of predefined areas (33) of said polymer (32).

13. The method according to claim 10, **characterized in that** the membrane (14) being initially formed by an ionically conducting polymer (32) having sulfonic acid functions, the first and second inactive areas (23, 24) are achieved by creating ionically non-conducting areas (31) by chemical conversion of the sulfonic acid functions of predefined areas (33) of said polymer (32) into sulfonyl halide functions.
